# EUROPEAN PATENT SPECIFICATION

(11) **EP 2 826 719 B1**
(45) Date of publication and mention of the grant of the patent: **06.02.2019**
(21) Application number: 13761366.7
(22) Date of filing: 27.02.2013
(51) Int. Cl.: B65D 5/40, G01N 35/02, B01L 3/00

(54) **REAGENT RECEPTACLE FOR USE IN BIOLOGICAL SAMPLE ANALYSIS DEVICE AND METHOD FOR MANUFACTURING REAGENT RECEPTACLE**
REAGENZBEHÄLTER ZUR VERWENDUNG IN EINER VORRICHTUNG ZUR ANALYSE BIOLOGISCHER PROBEN SOWIE VORRICHTUNG UND VERFAHREN ZUR HERSTELLUNG DES REAGENZBEHÄLTERS
RÉCEPTACLE À RÉACTIF À UTILISER DANS UN DISPOSITIF D'ANALYSE D'ÉCHANTILLON BIOLOGIQUE ET PROCÉDÉ DE FABRICATION DE RÉCEPTACLE À RÉACTIF

(30) Priority: 15.03.2012 JP 2012059168
(43) Date of publication of application: 21.01.2015
(73) Proprietor: Sysmex Corporation, Kobe-shi, Hyogo 651-0073 (JP)
(72) Inventor: HASEGAWA, Fuminari, Kobe-shi Hyogo 651-0073 (JP)
(74) Representative: Hoffmann Eitle
(86) International application number: PCT/JP2013/055201
(87) International publication number: WO 2013/136987

(56) References cited:
- EP-A1- 0 673 843
- EP-A1- 1 493 678
- GB-A- 1 009 251
- GB-A- 2 330 825
- JP-A- H0 680 138
- JP-A- H08 244 763
- JP-A- H10 218 169
- JP-A- 2002 080 028
- JP-A- 2011 209 218
- US-A- 6 027 016

## Description

### Technical Field

The present invention relates to a reagent container for housing a reagent to be used in an analyzer for analyzing biological samples such as blood and urine collected from humans or animals, and a method for manufacturing the reagent container.

### Background Art

Paper containers, for example, as described in Patent Documents 1 and 2 are known as containers for housing liquid.

Such paper containers are formed by applying hot air to a laminated material obtained by laminating thermoplastic resin on both surfaces of a paper substrate and folding the laminated material in which the thermoplastic resin has been melted into a predetermined shape.
GB 1 009 251 A discloses a prismatic fluid-tight container made of paper, card or the like and US 6 027 016 A discloses a carton having side panels which intersect at beveled edges.

### Citation List

### Patent Documents

Patent Document 1: JP H6-345077A
Patent Document 2: JP 2007-168872A

### Summary of the Invention

### Technical Problem

Since the reagent container houses chemicals therein, there is a demand to prevent liquid leakage due to breakage of the reagent container during transportation and to transport it safely. However, a paper container is more vulnerable to impact from the outside than a plastic container, and therefore, the paper container may be broken when a large impact is applied thereto, for example, when strong vibration occurs during transportation or when the container is dropped. As disclosed in Patent Documents 1 and 2, the bottoms of many liquid containers have a polygonal shape such as a quadrangle. Therefore, when impact is applied to the bottom surface of the liquid container, stress is concentrated on a corner portion at the lower end of the liquid container, and thereby, for example, a minute opening may be formed near the corner portion and the content may leak therefrom.

The present invention was made in view of the foregoing problems, and it is an object thereof to provide a reagent container that has higher impact resistance than a conventional one and is used in a biological sample analyzer, and a method for manufacturing the reagent container.

### Solution to Problem

In order to solve the above-described problems, there is provided herewith, in accordance with a first aspect of the present invention, a reagent container as defined in claim 1.

By adopting such a configuration, the corner portion including the vertex of the bottom surface is deformed when impact is applied to the bottom surface of the reagent container, and thereby, it is possible to distribute stress generated at the corner portion and to prevent the reagent container from being broken. Further, thereby, it is possible to enhance the impact resistance near the corner portion while shape stability of the reagent container is preferably maintained.

In the above-described embodiment, the biological sample analyzer may be a hemocyte analyzer for analyzing hemocytes in blood.

In the above-described embodiment, the hemocyte analyzer may include a measurement unit for measuring the hemocytes in blood using flow cytometry.

In the above-described embodiment, the predetermined regions in which the overlapping surfaces are not adhered to each other may be separately provided with respect to all of vertices of the bottom surface. Thereby, it is possible to prevent stress from being concentrated at any of the corner portions at the lower end of the container, and to further prevent the reagent container from being broken.

In the above-described embodiment, the non-adhered portion is a region in which the overlapping surfaces are not adhered to each other, wherein the region has a triangular shape having a vertex at a position that is spaced apart by a length (D8) from the vertex of the bottom surface (123), wherein the length (D8) is 3% or more and 18% or less with respect to a length of the one side of the bottom surface. In one embodiment, the length (D8) is 5 mm or more and 15 mm or less. Thereby, it is possible to provide sufficient resistance against impact generated when the reagent container is transported by a vehicle, an aircraft, or the like.

In the above-described embodiment, the sheet member may have a paper substrate layer and a thermoplastic resin layer, and the bottom surface may be formed by welding the thermoplastic resin layers of surfaces that overlap each other by folding the one end side of the tubular body. Thereby, it is possible to provide liquid resistance to the sheet member and to form the bottom surface without using other materials such as an adhesive.

In the above-described embodiment, the sheet member may be configured to have a barrier layer formed by ceramic vapor deposition between the substrate layer and the thermoplastic resin layer. Thereby, it is possible to prevent the liquid from being deteriorated due to oxygen, water vapor, or the like infiltrating the reagent container. Moreover, if the barrier layer is made of metal such as aluminum, its thermal conductivity is high, and therefore, the thermoplastic resin layer in the corner portion may be also melted when the sheet member is heated. On the other hand, when the above-described configuration is adopted, the thermal conductivity of the sheet member is not too high, and it is possible to reliably prevent the thermoplastic resin layer in the corner portion from being melted when the sheet member is heated.

In the above-described embodiment, the reagent container may have an upper surface formed by folding the other end side of the tubular body and adhering overlapping surfaces to each other.

In the above-described embodiment, the reagent container may house a reagent containing a surfactant. The surfactant tends to erode paper by an osmotic action. Accordingly, when the reagent container according to the present invention is used as a reagent container for housing a reagent containing a surfactant, it can be expected that the reagent container is highly effective in preventing liquid leakage.

In the above-described embodiment, the biological sample may be blood, and the reagent may be a hemolyzing agent for hemolyzing erythrocytes in the blood.

In the above-described embodiment, the biological sample may be blood, and the reagent may be a diluting solution used to dilute the blood.

In the above-described embodiment, the tubular body may have a quadrangular cross-section, a belt-shaped portion that is provided in a belt shape along the one end, a pair of first rectangular portions that are connected to the belt-shaped portion and oppose each other, and a pair of second rectangular portions that are connected to the belt-shaped portion and oppose each other may be provided on the one end side of the tubular body, and the bottom surface may be formed by folding the pair of first rectangular portions, the pair of second rectangular portions and the belt-shaped portion and adhering regions other than vertex portions of the first rectangular portions and the second rectangular portions in overlapping surfaces. Thereby, it is possible to enhance the impact resistance near the corner portion while reliably preventing liquid leakage from the bottom surface of the reagent container.

In the above-described embodiment, it is preferable that a portion of an inner surface of the first rectangular portion and a portion of an inner surface of the second rectangular portion that is adjacent to the first rectangular portion are adhered to each other.

In the above-described embodiment, it is preferable that the pair of first rectangular portions and the pair of second rectangular portions are folded by folding the pair of first rectangular portions toward the inner side of the tubular body and pressing the pair of second rectangular portions so as to overlap the pair of folded first rectangular portions. By doing this, it is possible to easily form the bottom surface of the reagent container.

In the above-described embodiment, the side wall surface may have a pair of third rectangular portions that are connected to the pair of first rectangular portions and oppose each other, the first rectangular portion may include a first side shared with the third rectangular portion and a second side facing the first side, and the pair of first rectangular portions may be folded toward the inner side of the tubular body along a first straight line that joins a first vertex at one end on the first side and a middle point of the second side and a second straight line that joins a second vertex at the other end of the first side and the middle point of the second side.

In the above-described embodiment, the side wall surface may have a pair of fourth rectangular portions that are connected to the pair of second rectangular portions and oppose each other, the second rectangular portion may include a third side shared with the fourth rectangular portion and a fourth side facing the third side, a first right triangle that includes the first straight line as an oblique side and a second right triangle that includes the second straight line as an oblique side may be formed in the first rectangular portion, a third right triangle including, as an oblique side, a third straight line that joins a third vertex at one end of the third side and a middle point of the fourth side and a fourth right triangle including, as an oblique side, a fourth straight line that joins a fourth vertex at the other end of the third side and the middle point of the fourth side may be formed in the second rectangular portion, and the pair of first rectangular portions and the pair of second rectangular portions may be folded so that an inner surface of the first right triangle comes into contact with an inner surface of the fourth right triangle adjacent to the first right triangle and an inner surface of the second right triangle comes into contact with an inner surface of the third right triangle adjacent to the second right triangle.

In the above-described embodiment, a region including the first vertex of the first right triangle and a region including the fourth vertex of the fourth right triangle need not be adhered to each other, and a region including the second vertex of the second right triangle and a region including the third vertex of the third right triangle need not be adhered to each other.

Moreover, according to a second aspect of the present invention, there is provided a method for manufacturing a reagent container as defined in claim 16.

Such a method can be used to manufacture the reagent container whose impact resistance is enhanced. When impact is applied to the bottom surface of this reagent container, the corner portion including the vertex of the bottom surface is deformed, and thereby, it is possible to distribute stress generated at the corner portion and to prevent the reagent container from being broken.

In the above-described embodiment, the length is 3% or more and 18% or less with respect to a length of the one side of the bottom surface. Advantageous Effects of the Invention

With the present invention, it is possible to enhance the impact resistance of a reagent container for a biological sample analyzer compared to a conventional one.

### Brief Description of Drawings

FIG. 1 is a perspective view of the exterior of a reagent container according to an embodiment.
FIG. 2 is a perspective view of the exterior of the reagent container according to the embodiment.
FIG. 3 is a perspective view illustrating a usage state of the reagent container according to the embodiment.
FIG. 4 is a cross-sectional view illustrating a configuration of a sheet member.
FIG. 5 is a developed view of the reagent container according to the embodiment.
FIG. 6 is a perspective view illustrating a configuration of a tubular carton.
FIG. 7 is a schematic view illustrating molten portions of a carton bottom portion.
FIG. 8 is a drawing illustrating another example of a shape of the molten portion.
FIG. 9 is a drawing illustrating a step of folding the carton bottom portion.
FIG. 10 is a perspective view of a bottom surface of the reagent container according to the embodiment.
FIG. 11 is a bottom view of the reagent container according to the embodiment.
FIG. 12 is a cross-sectional arrow view taken along A-A line of FIG. 11, illustrating a cross-section of the bottom surface.

### Description of Embodiments

Hereinafter, a preferred embodiment of the present invention will be described with reference to the drawings.

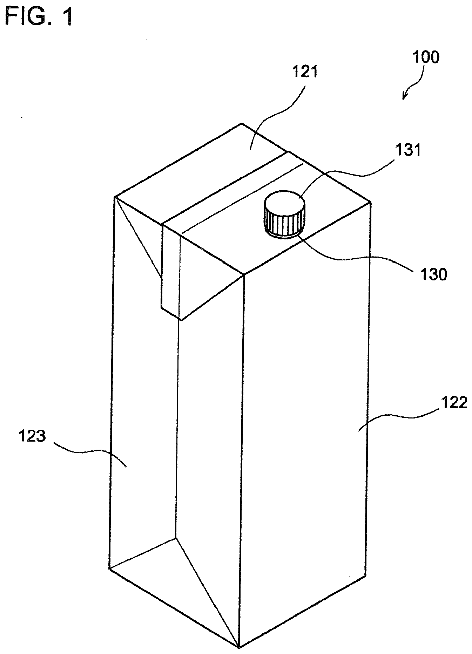

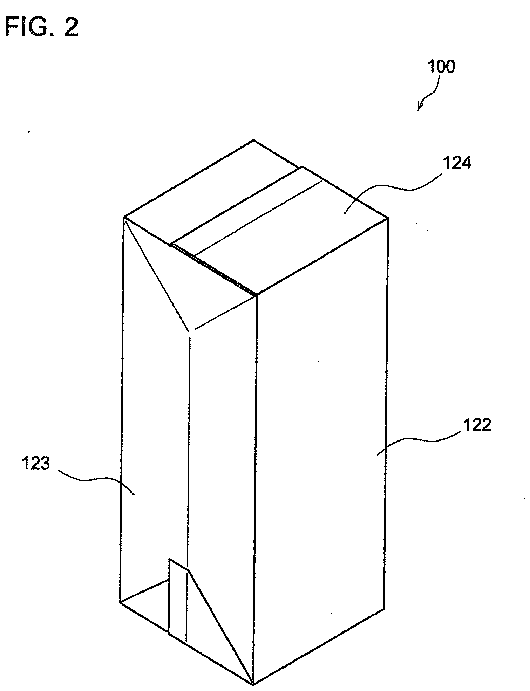

The reagent container according to this embodiment is a reagent container for housing a reagent to be used to analyze biological samples. FIGS. 1 and 2 are perspective views of the exterior of a reagent container 100. The reagent container 100 is constituted by a sheet member obtained by coating both surfaces of paper with polyethylene. The reagent container 100 has a rectangular parallelepiped shape with a square bottom surface, and its volume is 4 liters. Also, the reagent container 100 is used to house a hemolyzing agent or a diluting solution that is used when analyzing blood. The hemolyzing agent is a reagent for hemolyzing erythrocytes and contains a surfactant. A nonionic surfactant or an anionic surfactant is used as the surfactant. It should be noted that a cationic surfactant may be used in addition to the nonionic surfactant or the anionic surfactant. The diluting solution is a reagent used to dilute blood as well as to wash a channel of a measurement unit 2 of a biological sample analyzer 1, and also contains a surfactant. It should be noted that in this embodiment, the reagent container 100 houses the hemolyzing agent.

As shown in the drawings, the reagent container 100 has an upper surface 121, a front surface 122, side surfaces 123, a back surface (not shown) and a bottom surface 124. The upper surface 121 of the reagent container 100 is provided with an opening 130, and the opening 130 of the reagent container 100 before being unsealed is sealed by a cap 131.

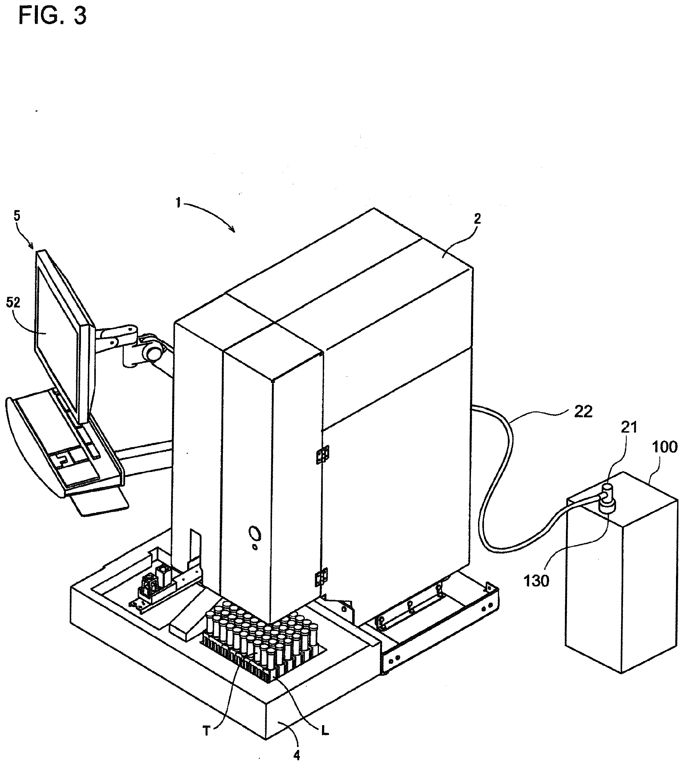

FIG. 3 is a perspective view illustrating a usage state of the reagent container 100. As shown in FIG. 3, to be used, the reagent container 100 is connected to the biological sample analyzer 1. The biological sample analyzer 1 is a multiple-item hemocyte analyzer for detecting leukocytes, erythrocytes, platelets, and the like, which are contained in a blood sample, and for counting each type of the hemocytes. As shown in FIG. 3, the biological sample analyzer 1 includes the measurement unit 2, a transporting unit 4 disposed on the front surface side with respect to the measurement unit 2, and an information processing unit 5 that can control the measurement unit 2 and the transporting unit 4.

The transporting unit 4 transports a specimen rack L housing a plurality of sample containers T. A sample container T has a tubular shape and houses a blood sample collected from a patient therein. The measurement unit 2 sucks a blood sample from a sample container T housed in the specimen rack L that has been transported by the transporting unit 4, and measures the blood sample.

The measurement unit 2 can measure leukocytes, nucleated erythrocytes, and the like contained in the blood sample by flow cytometry with a semiconductor laser. In the flow cytometry, the measurement sample is caused to pass through a flow cell in the state where the measurement sample is surrounded by a sheath liquid flow. When the measurement sample passes through the flow cell, electrical or optical information is detected and the hemocytes contained in the blood sample are classified and counted based on the detection data. The measurement unit 2 uses the reagent (hemolyzing agent) housed in the reagent container 100 when measuring the blood sample. That is, in order to break the cell membranes of the erythrocytes contained in the blood sample when detecting the leukocytes, for example, the hemolyzing agent is mixed into the blood sample and then this mixture (measurement sample) is subjected to the measurement. It should be noted that the reagent container 100 may be used to house the diluting solution that is used as the sheath liquid for surrounding the measurement sample in a flow cell. The measurement data produced as a result of measuring the measurement samples are transmitted to the information processing unit 5 constituted by a computer, and then the information processing unit 5 analyzes the measurement data to provide the final results of the analysis. The obtained results of the analysis is displayed in a display portion 52 provided in the information processing unit 5.

A connector 21 of the biological sample analyzer 1 is connected to the opening 130 of the reagent container 100 in a state where the cap 131 is removed therefrom. The connector 21 is connected to one end of a tube 22 and the other end of the tube 22 is connected to the measurement unit 2. Moreover, the connector 21 has a suction tube (not shown) extending downward inside the reagent container 100, and the suction tube is inserted through the opening 130 when the connector 21 is attached to the reagent container 100. While the biological sample analyzer 1 is used, the reagent inside the reagent container 100 is supplied to the measurement unit 2 through the suction tube inside the reagent container 100, the connector 21 and the tube 22. A suction tube and a connector that have a configuration, for example, disclosed in JP H9-297146A or US 2005/0191211A1 can be used as such a suction tube and the connector 21. Once the connector 21 is connected to the opening 130 in order to use the biological sample analyzer 1, by the next time the reagent container 100 is replaced by a new one after the reagent inside the reagent container 100 is consumed, the reagent container 100 is used in a state where the connector 21 is connected to the opening 130.

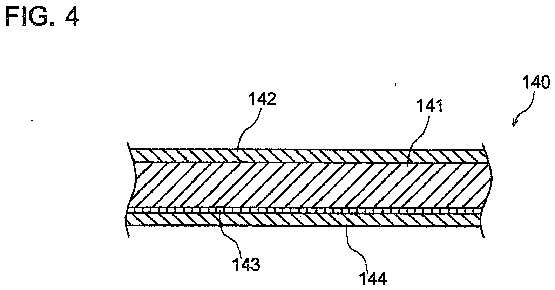

Next, a method for manufacturing the reagent container 100 will be described. The reagent container 100 is formed by folding the sheet member. FIG. 4 is a cross-sectional view illustrating a configuration of the sheet member. A sheet member 140 has a multilayer structure. The sheet member 140 includes a substrate layer 141 made of a sheet of paper, a polyethylene layer 142 provided on one surface of the substrate layer 141, and a barrier layer 143 and a polyethylene layer 144 provided on the other surface of the substrate layer 141. The polyethylene layers 142 and 144 perform the function of preventing the reagent from infiltrating through the substrate layer 141 and leaking out of the reagent container 100, and, in addition, the polyethylene layers 142 and 144 are melted by being heated and are used to weld the folded sheet member. The barrier layer 143 is provided between the substrate layer 141 and the polyethylene layer 144, and formed of silicon oxide by ceramic vapor deposition. It should be noted that aluminum oxide, magnesium oxide, titanium oxide, silicon nitride, zirconium oxide, diamondlike carbon, or the like may be used as the material instead of silicon oxide. The barrier layer 143 performs the function of preventing the reagent from being deteriorated due to oxygen, water vapor, or the like infiltrating the reagent container 100. The surface (referred to as "back side" hereinafter) on the side where the barrier layer 143 is formed with respect to the substrate layer 141 is an inner surface of the reagent container 100, and the surface (referred to as "front side" hereinafter) on the side where the barrier layer 143 is not formed with respect to the substrate layer 141 is an outer surface of the reagent container 100.

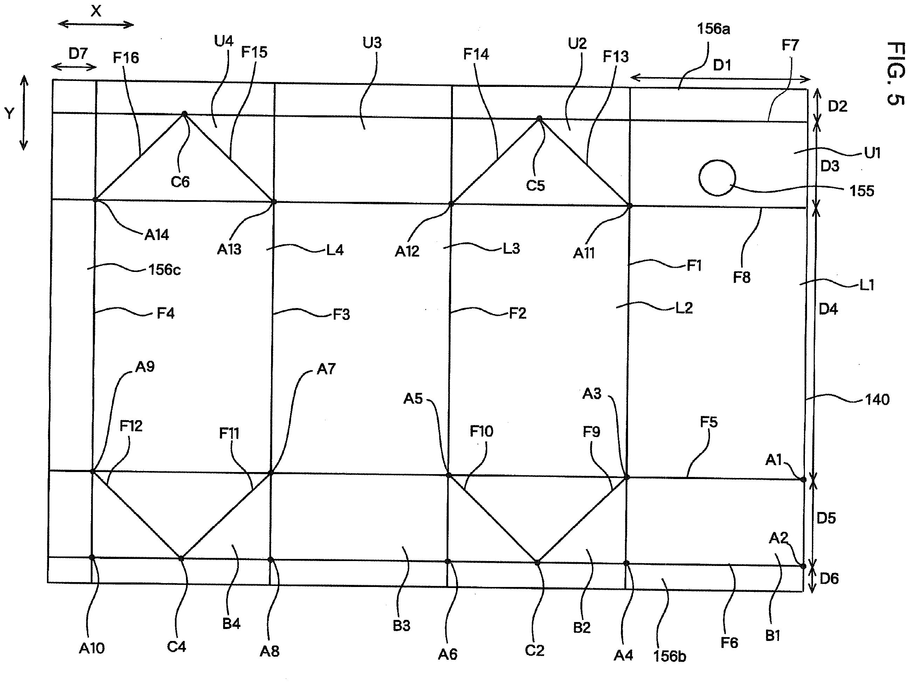

FIG. 5 is a developed view of the reagent container 100. The sheet member 140 is formed into substantially a rectangular sheet. The sheet member 140 is provided with folds F1 to F16 to be used to fold the sheet member 140 to form the reagent container 100. The folds F1 to F4 are bend lines that are in the form of a straight line and are parallel to each other. Moreover, the folds F5 to F8 are bend lines that are in the form of a straight line and are orthogonal to the folds F1 to F4. Each of the folds F1 to F4 intersects the folds F5 to F8.

Moreover, the sheet member 140 is divided into a plurality of rectangular portions by the folds F1 to F8. Specifically, the sheet member 140 has rectangular portions U1, U2, U3 and U4 that constitute the upper surface of the reagent container 100, rectangular portions L1, L2, L3 and L4 that constitute the front surface, the side surfaces and the back surface of the reagent container 100, and rectangular portions B1, B2, B3 and B4 that constitute the bottom surface of the reagent container 100. In addition, the rectangular portion U1, which is one of the rectangular portions constituting the upper surface, is provided with a circular hole 155 for constituting the opening 130. Hereinafter, in the description of the sheet member 140, the side where the rectangular portions U1, U2, U3 and U4 that constitute the upper surface are provided is an upper side, the side where the rectangular portions B1, B2, B3 and B4 that constitute the bottom surface are provided is a lower side, the side where the rectangular portion L1 that constitutes the front surface is provided is a right side, and the side where the rectangular portion L4 that constitutes the side surface is provided is a left side.

The rectangular portion B2 is provided with a fold F9 in the form of a straight line that joins an upper right vertex A3 of the rectangular portion B2 (that is, the intersection of the fold F1 and the fold F5) and a middle point C2 of the lower side of the rectangular portion B2. In addition, the rectangular portion B2 is provided with a fold F10 in the form of a straight line that joins an upper left vertex A5 of the rectangular portion B2 (that is, the intersection of the fold F2 and the fold F5) and a middle point C2 of the lower side of the rectangular portion B2.

In the same manner, the rectangular portion B4 is provided with a fold F11 in the form of a straight line that joins an upper right vertex A7 of the rectangular portion B4 (that is, the intersection of the fold F3 and the fold F5) and a middle point C4 of the lower side of the rectangular portion B4, and a fold F12 in the form of a straight line that joins an upper left vertex A9 of the rectangular portion B4 (that is, the intersection of the fold F4 and the fold F5) and a middle point C4 of the lower side of the rectangular portion B4. These folds F9 to F12 are provided in order to form the bottom surface 124.

The rectangular portion U2 is provided with a fold F13 in the form of a straight line that joins a lower right vertex A11 of the rectangular portion U2 (that is, the intersection of the fold F1 and the fold F8) and a middle point C5 of the upper side of the rectangular portion U2, and a fold F14 in the form of a straight line that joins a lower left vertex A12 of the rectangular portion U2 (that is, the intersection of the fold F2 and the fold F8) and a middle point C5 of the upper side of the rectangular portion U2. In the same manner, the rectangular portion U4 is provided with a fold F15 in the form of a straight line that joins a lower right vertex A13 of the rectangular portion U4 (that is, the intersection of the fold F3 and the fold F8) and a middle point C6 of the upper side of the rectangular portion U4, and a fold F16 in the form of a straight line that joins a lower left vertex A14 of the rectangular portion U4 (that is, the intersection of the fold F4 and the fold F8) and a middle point C6 of the upper side of the rectangular portion U4. These folds F13 to F16 are provided in order to form the upper surface 121.

A rectangular portion 156a having a belt shape is provided at the upper end of the sheet member 140. In the same manner, a rectangular portion 156b having a belt shape is provided at the lower end of the sheet member 140. These rectangular portions 156a and 156b serve as an extension portion for preventing liquid leakage when the sheet member 140 is folded to form the reagent container 100.

A rectangular portion 156c having a belt shape is provided at the left end of the sheet member 140. This rectangular portion 156c serves as a welding portion when a tubular body having a quadrangular cross-section is formed from the sheet member 140.

A length D1 of the rectangular portions U1, U2, U3 and U4 in a longitudinal direction (in a direction of X in FIG. 5) is 140 mm. In addition, a length D2 of the rectangular portion 156a in a short direction (in a direction of Y in FIG. 5) is 25 mm, a length D3 of the rectangular portions U1, U2, U3 and U4 in a short direction (in a direction of Y in FIG. 5) is 70.5 mm, a length D4 of the rectangular portions L1, L2, L3 and L4 in a longitudinal direction (in a direction of Y in FIG. 5) is 225 mm, a length D5 of the rectangular portions B1, B2, B3 and B4 in a short direction (in a direction of Y in FIG. 5) is 74.5 mm, and a length D6 of the rectangular portion 156b in a short direction (in a direction of Y in FIG. 5) is 20 mm. Moreover, a length D7 of the rectangular portion 156c in a short direction (in a direction of X in FIG. 5) is 37 mm.

Steps of manufacturing the reagent container 100 will be described. First, the rectangular portion 156c on the front side of the sheet member 140 is heated by hot air. Thereby, the polyethylene layer 142 of the rectangular portion 156c is melted. The sheet member 140 is folded upward along the four folds F1, F2, F3 and F4 in a vertical direction and is formed into a tubular shape having a quadrangular cross-section. At that time, the front side of the rectangular portion 156c comes into close contact with the back side at the right end of the sheet member 140, and the rectangular portion 156c and the right end portion of the sheet member 140 are welded by solidifying the molten polyethylene layer 142. In this manner, a tubular body having a quadrangular cross-section (referred to as "tubular carton" hereinafter) is formed.

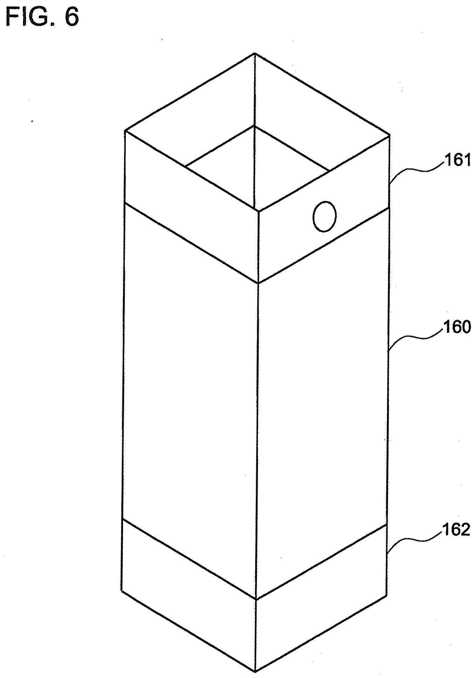

FIG. 6 is a perspective view illustrating a configuration of the tubular carton. A tubular carton 160 has a tubular shape having a quadrangular cross-section with its upper and lower ends being open. The tubular carton 160 has a carton top portion 161 constituted by the rectangular portions U1, U2, U3 and U4 that are provided on the upper end side and a carton bottom portion 162 constituted by the rectangular portions B1, B2, B3 and B4 that are provided on the lower end side.

After the tubular carton 160 is formed, the process proceeds to a step of forming the bottom surface 124 (see FIG. 2) of the reagent container 100. In the step of forming the bottom surface 124 of the reagent container 100, a mandrel having a quadrangular prism shape is inserted into the tubular carton 160. At that time, the mandrel is inserted from above the tubular carton 160, and the lower end portion of the tubular carton 160, that is, the end portion on the side of the carton bottom portion 162 is open.

Hot air from a hot air nozzle is applied only to trapezoidal portions 171 to 178, which will be described later, in the inner surface of the carton bottom portion 162 in this state, so that the polyethylene layers 142 and 144 of the trapezoidal portions 171 to 178 are melted. Thereby, molten portions are formed in the trapezoidal portions 171 to 178 of the carton bottom portion 162.

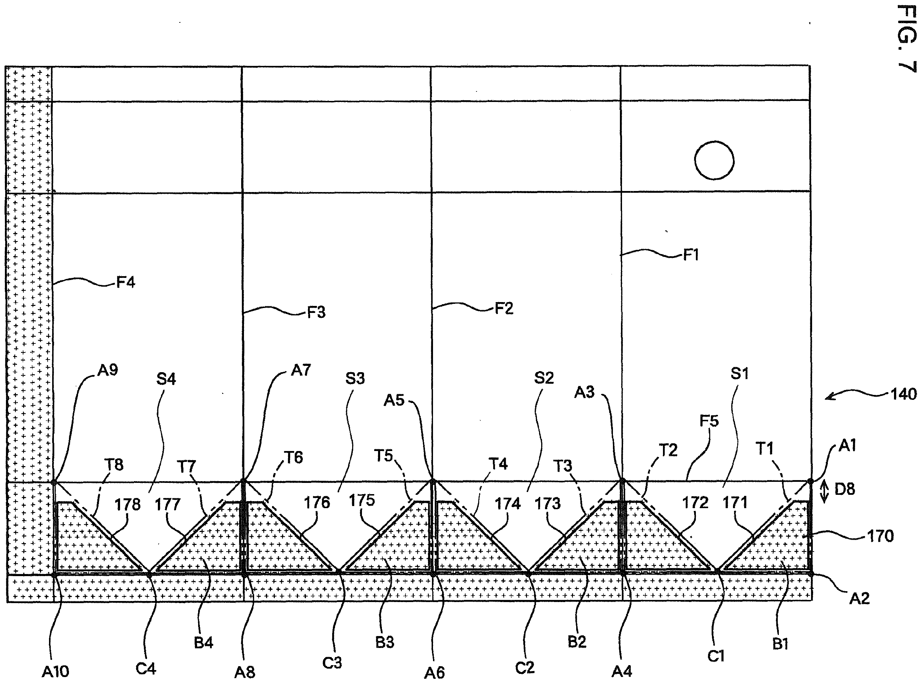

FIG. 7 is a schematic view illustrating the molten portions of the carton bottom portion 162. A molten portion 170 in which a plurality of trapezoidal portions 171 to 178 are located in a row is formed in the carton bottom portion 162. The rectangular portion B1 included in the carton bottom portion 162 is provided with two trapezoidal portions 171 and 172, the rectangular portion B2 is provided with two trapezoidal portions 173 and 174, the rectangular portion B3 is provided with two trapezoidal portions 175 and 176, and the rectangular portion B4 is provided with two trapezoidal portions 177 and 178. Hereinafter, the trapezoidal portions 171 to 178 will be described.

As shown in FIG. 7, the rectangular portion B1 has vertices A1, A2, A3 and A4 at its four corners. The rectangular portion B2 has vertices A3, A4, A5 and A6 at its four corners. This rectangular portion B2 is adjacent to the rectangular portion B1 and shares the vertices A3 and A4 with the rectangular portion B1. Moreover, the rectangular portion B3 has vertices A5, A6, A7 and A8 at its four corners, and the rectangular portion B4 has vertices A7, A8, A9 and A10 at its four corners. The rectangular portion B3 is adjacent to the rectangular portion B2 and the rectangular portion B4, and shares the vertices A5 and A6 with the rectangular portion B3 and the vertices A7 and A8 with the rectangular portion B4.

As shown in FIG. 7, it is assumed that two small triangles T1 and T2 and a large triangle S1 are located in the rectangular portion B1. The small triangle T1 has, as its vertices, the vertex A1 at the upper right corner of the rectangular portion B1, the vertex A2 at the lower right corner of the rectangular portion B1 and a middle point C1 of the lower side of the rectangular portion B1. That is, the small triangle T1 has, as its sides, the right side of the rectangular portion B1, the right half of the lower side of the rectangular portion B1 and a line segment joining the vertex A1 and the middle point C1. In addition, the angle of the vertex A2 is a right angle, and the two sides extending from the vertex A2 (the right side of the rectangular portion B1 and the right half of the lower side of the rectangular portion B1) have the same length. That is, the small triangle T1 is an isosceles right triangle.

In the same manner, the small triangle T2 has, as its vertices, the vertex A3 at the upper left corner of the rectangular portion B1, the vertex A4 at the lower left corner of the rectangular portion B1 and a middle point C1 of the lower side of the rectangular portion B1. That is, the small triangle T2 has, as its sides, the left side of the rectangular portion B1, the left half of the lower side of the rectangular portion B1 and a line segment joining the vertex A3 and the middle point C1. The small triangle T2 is also an isosceles right triangle, in which the angle of the vertex A4 is a right angle and the two sides extending from the vertex A4 (the left side of the rectangular portion B1 and the left half of the lower side of the rectangular portion B1) have the same length. Moreover, the rectangular portion B1 is a rectangle, and therefore, the small triangles T1 and T2 have axially symmetrical shapes with respect to the symmetry axis extending from the middle point C1 in parallel with the left and right sides of the rectangular portion B1. The large triangle S1 is an isosceles right triangle that has, as its vertices, the vertices A1 and A3 of the rectangular portion B1 and the middle point C1.

In the same manner, it is assumed that small triangles T3 and T4 and a large triangle S2 are located in the rectangular portion B2, small triangles T5 and T6 and a large triangle S3 are located in the rectangular portion B3, and small triangles T7 and T8 and a large triangle S4 are located in the rectangular portion B4. The small triangle T3 has, as its vertices, the vertex A3 at the upper right corner of the rectangular portion B2, the vertex A4 at the lower right corner of the rectangular portion B2 and a middle point C2 of the lower side of the rectangular portion B2. Here, the rectangular portions B1, B2, B3 and B4 are congruent with each other. Accordingly, the small triangle T3 is an isosceles right triangle congruent with the small triangle T1. The small triangle T4 has, as its vertices, the vertex A5 at the upper left corner of the rectangular portion B2, the vertex A6 at the lower left corner of the rectangular portion B2 and a middle point C2 of the lower side of the rectangular portion B2. This small triangle T4 is an isosceles right triangle congruent with the small triangle T2.

The small triangle T5 has, as its vertices, the vertex A5 at the upper right corner of the rectangular portion B3, the vertex A6 at the lower right corner of the rectangular portion B3 and a middle point C3 of the lower side of the rectangular portion B3. Moreover, the small triangle T7 has, as its vertexes, the vertex A7 at the upper right corner of the rectangular portion B4, the vertex A8 at the lower right corner of the rectangular portion B4 and a middle point C4 of the lower side of the rectangular portion B4. These small triangles T5 and T7 are congruent with the small triangle T1.

The small triangle T6 has, as its vertices, the vertex A7 at the upper left corner of the rectangular portion B3, the vertex A8 at the lower left corner of the rectangular portion B3 and a middle point C3 of the lower side of the rectangular portion B3. Moreover, the small triangle T8 has, as its vertices, the vertex A9 at the upper left corner of the rectangular portion B4, the vertex A10 at the lower left corner of the rectangular portion B4 and a middle point C4 of the lower side of the rectangular portion B4. These small triangles T6 and T8 are congruent with the small triangle T2. It should be noted that the large triangles S2 to 4 are congruent with the large triangle S1.

The small triangle T2 and the small triangle T3 share the side joining the vertex A3 and the vertex A4. This side joining the vertex A3 and the vertex A4 is located on the fold F1. Moreover, the small triangles T2 and T3 have axially symmetrical shapes with respect to the fold F1 as the symmetry axis. In the same manner, the small triangle T4 and the small triangle T5 share the side joining the vertex A5 and the vertex A6. This side joining the vertex A5 and the vertex A6 is located on the fold F2. These small triangles T4 and T5 have axially symmetrical shapes with respect to the fold F2 as the symmetry axis. The small triangle T6 and the small triangle T7 share the side joining the vertex A7 and the vertex A8. This side joining the vertex A7 and the vertex A8 is located on the fold F3. These small triangles T6 and T7 have axially symmetrical shapes with respect to the fold F3 as the symmetry axis.

The trapezoidal portion 171 has a trapezoidal shape in which a portion including the vertex A1 of the small triangle T1 is removed. That is, the trapezoidal portion 171 has an upper edge formed by removing a portion including the vertex A1 of the small triangle T1, a lower edge which is a line segment joining the vertices A2 and C1, a side extending from the vertex A2 to the right end of the upper edge, and a side extending from the vertex C1 to the left end of the upper edge.

The trapezoidal portion 172 has a trapezoidal shape in which a portion including the vertex A3 of the small triangle T2 is removed. That is, the trapezoidal portion 171 has an upper edge formed by removing a portion including the vertex A3 of the small triangle T2, a lower edge which is a line segment joining the vertices A4 and C1, a side extending from the vertex A4 to the left end of the upper edge, and a side extending from the vertex C1 to the right end of the upper edge.

In the same manner, the trapezoidal portion 173 has a trapezoidal shape in which a portion including the vertex A3 of the small triangle T3 is removed, the trapezoidal portion 174 has a trapezoidal shape in which a portion including the vertex A5 of the small triangle T4 is removed, the trapezoidal portion 175 has a trapezoidal shape in which a portion including the vertex A5 of the small triangle T5 is removed, the trapezoidal portion 176 has a trapezoidal shape in which a portion including the vertex A7 of the small triangle T6 is removed, the trapezoidal portion 177 has a trapezoidal shape in which a portion including the vertex A7 of the small triangle T7 is removed, and the trapezoidal portion 178 has a trapezoidal shape in which a portion including the vertex A9 of the small triangle T8 is removed.

The trapezoidal portion 172 and the trapezoidal portion 173 share one side that is located on the fold F1. That is, the trapezoidal portion 172 and the trapezoidal portion 173 have axially symmetrical shapes with respect to the fold F1 as the symmetry axis. In the same manner, the trapezoidal portion 174 and the trapezoidal portion 175 share one side that is located on the fold F2 and have axially symmetrical shapes with respect to the fold F2 as the symmetry axis. The trapezoidal portion 176 and the trapezoidal portion 177 share one side that is located on the fold F3 and have axially symmetrical shapes with respect to the fold F3 as the symmetry axis.

In other words, the trapezoidal portion 171 included in the molten portion 170 has the same shape as the above-described small triangle T1, except that the vertex A1 and its surroundings are removed. Also, the trapezoidal portion 172 has the same shape as the above-described small triangle T2, except that the vertex A3 and its surroundings are removed. In the same manner, the trapezoidal portions 173 to 178 have the same shape as the small triangles T3 to T8, respectively, except that the vertices A3, A5 and A7, and their surroundings are removed. It should be noted that the trapezoidal portion 171 is provided in the region spaced apart by a length D8 (10 mm) from the vertex A1, and the trapezoidal portion 172 is provided in the region spaced apart by the same length D8 (10 mm) from the vertex A3. The other trapezoidal portions 173 to 178 are similarly provided.

Moreover, as shown in FIG. 5, the folds F9 and F10 are provided so as to join the two vertices A3 and A5 at the upper end of the rectangular portion B2 and the middle point C2 of the lower side of the rectangular portion B2. In the same manner, the folds F11 and F12 are provided so as to join the two vertices A7 and A9 at the upper end of the rectangular portion B4 and the middle point C4 of the lower side of the rectangular portion B4. That is, in the rectangular portion B2, the folds F9 and F10 are provided along an oblique side of the above-described small triangle T3 and an oblique side of the above-described small triangle T4. In the same manner, in the rectangular portion B4, the folds F11 and F12 are provided along an oblique side of the small triangle T5 and an oblique side of the triangle T6.

Hot air from a hot air nozzle is applied only to the trapezoidal portions 171 to 178 in the inner surface of the carton bottom portion 162. That is, hot air is applied to the trapezoidal portions 171 to 178 in the inner surface of the carton bottom portion 162, and is not applied to the other portions. Therefore, the polyethylene layer 144 and the polyethylene layer 142 are melted in the trapezoidal portions 171 to 178.

It should be noted that in FIG. 7, it is shown that the adjacent two trapezoidal portions 172 and 173, 174 and 175, and 176 and 177 are away from each other, but, actually, the trapezoidal portions 172 and 173, 174 and 175, and 176 and 177 are not away from each other, and a continuous region is formed. That is, the trapezoidal portions 172 and 173 are formed into one trapezoid, the trapezoidal portions 174 and 175 are formed into one trapezoid, and the trapezoidal portions 176 and 177 are formed into one trapezoid.

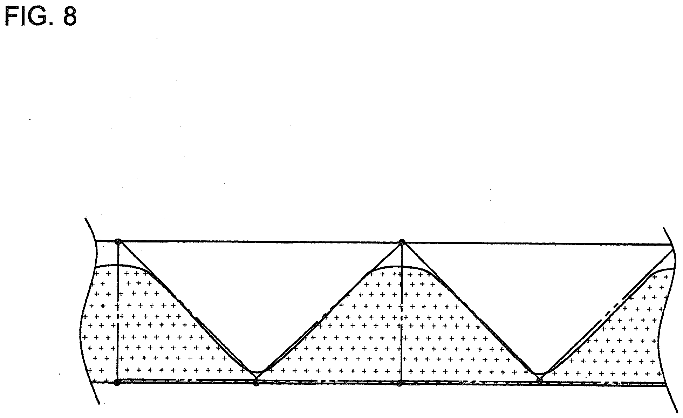

It should be noted that in this embodiment, the configuration in which each of the trapezoidal portions 171 to 177 has a trapezoidal shape having an upper edge in the form of a straight line is adopted, but there is no limitation to this configuration. FIG. 8 is a drawing illustrating another example of a shape of the molten portion. The trapezoidal portions 171 to 177 need not have the upper edge portions in the form of a straight line and may have a shape in which the upper end portion is curved so as to be a circular arc as shown in FIG. 8. Moreover, the trapezoidal portions 171 to 177 need not have a vertex with an acute angle in the same manner as in a trapezoid and may have corner portions in a rounded shape, or in a portion in which two trapezoidal portions, such as the trapezoidal portions 171 and 172, are connected via one vertex, the two trapezoidal portions may be connected so as to have a certain width as shown in FIG. 8.

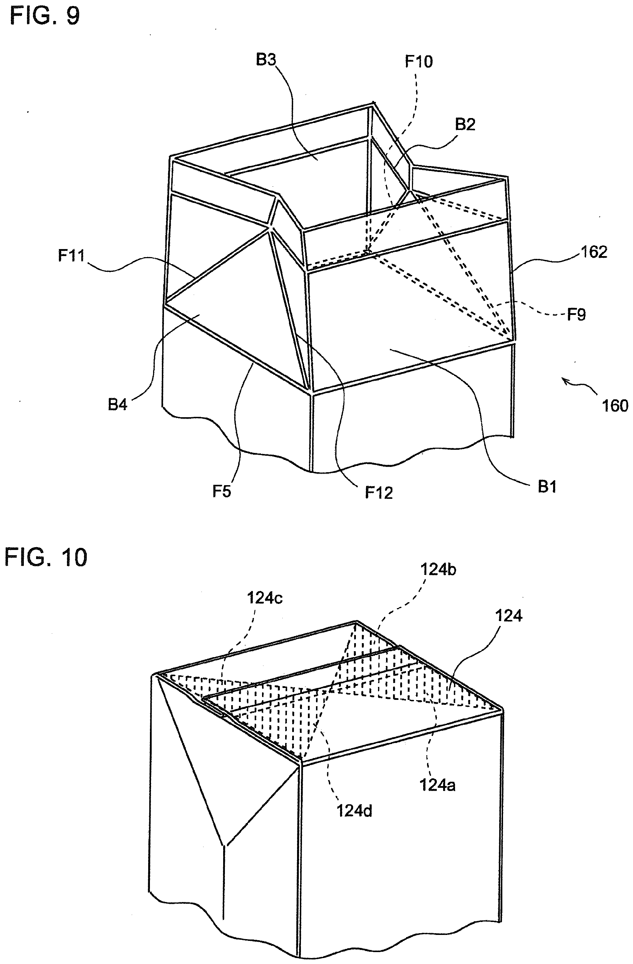

Next, the process proceeds to a step of folding the carton bottom portion 162. In this step, the carton bottom portion 162 is folded along the folds by a folding device (not shown). FIG. 9 is a drawing illustrating a step of folding the carton bottom portion 162. As shown in the drawing, the tubular carton 160 is folded upward along the fold F5 at the upper end of the rectangular portions B1, B2, B3 and B4, and the rectangular portions B2 and B4 are simultaneously folded downward along the oblique folds F9, F10, F11 and F12.

As a result, on the back side of the sheet member 140 (on the surface on the side where the polyethylene layer 144 is formed), the trapezoidal portion 173 of the rectangular portion B2 comes into close contact with the trapezoidal portion 172 of the rectangular portion B1, and the trapezoidal portion 174 of the rectangular portion B2 comes into close contact with the trapezoidal portion 175 of the rectangular portion B3. In the same manner, the trapezoidal portion 177 of the rectangular portion B4 comes into close contact with the trapezoidal portion 176 of the rectangular portion B3, and the trapezoidal portion 178 of the rectangular portion B4 comes into close contact with the trapezoidal portion 171 of the rectangular portion B1. That is, the small triangle T3 of the rectangular portion B2 overlaps the small triangle T2 of the rectangular portion B1, and the small triangle T4 of the rectangular portion B2 overlaps the small triangle T5 of the rectangular portion B3. In the same manner, the small triangle T7 of the rectangular portion B4 overlaps the small triangle T6 of the rectangular portion B3, and the small triangle T8 of the rectangular portion B4 overlaps the small triangle T1 of the rectangular portion B1.

When pressure is applied to the carton bottom portion 162 in a state where the carton bottom portion 162 is folded in this manner, on the front side of the sheet member 140 (on the surface on the side where the polyethylene layer 142 is formed), the small triangle T3 and the small triangle T4 of the rectangular portion B2 come into close contact with the large triangle S2, and the small triangle T7 and the small triangle T8 of the rectangular portion B4 come into close contact with the large triangle S4. Thereby, the bottom surface 124 is formed. FIG. 10 is a perspective view of the bottom surface 124 after being formed. On the back side of the sheet member 140, as a result of the small triangle T3 of the rectangular portion B2 overlapping the small triangle T2 of the rectangular portion B1, a triangular overlapping portion 124a is formed in which the two sheet portions overlap each other. Moreover, on the back side of the sheet member 140, as a result of the small triangle T4 of the rectangular portion B2 overlapping the small triangle T5 of the rectangular portion B3, a triangular overlapping portion 124b is formed in which the two sheet portions overlap each other. In the same manner, as a result of the small triangle T7 of the rectangular portion B4 overlapping the small triangle T6 of the rectangular portion B3, an overlapping portion 124c is formed, and as a result of the small triangle T8 of the rectangular portion B4 overlapping the small triangle T1 of the rectangular portion B1, an overlapping portion 124d is formed.

Next, the process proceeds to a step of cooling the bottom surface 124. In this step, the bottom surface 124 is cooled by a cooling device. In the overlapping portions 124a, 124b, 124c and 124d, the polyethylene layers 144 of the two sheet portions, which have been melted, are in close contact with each other. By cooling the bottom surface 124, the molten polyethylene layers 144 are solidified to weld the sheet portions of the overlapping portions 124a, 124b, 124c and 124d. It should be noted that also on the front side of the sheet member 140 of the carton bottom portion 162, the polyethylene layers 142 of the two sheet portions, which have been melted, are in close contact with each other, and by cooling the bottom surface 124, these two sheet portions are welded. Thereby, the bottom surface 124 is completed.

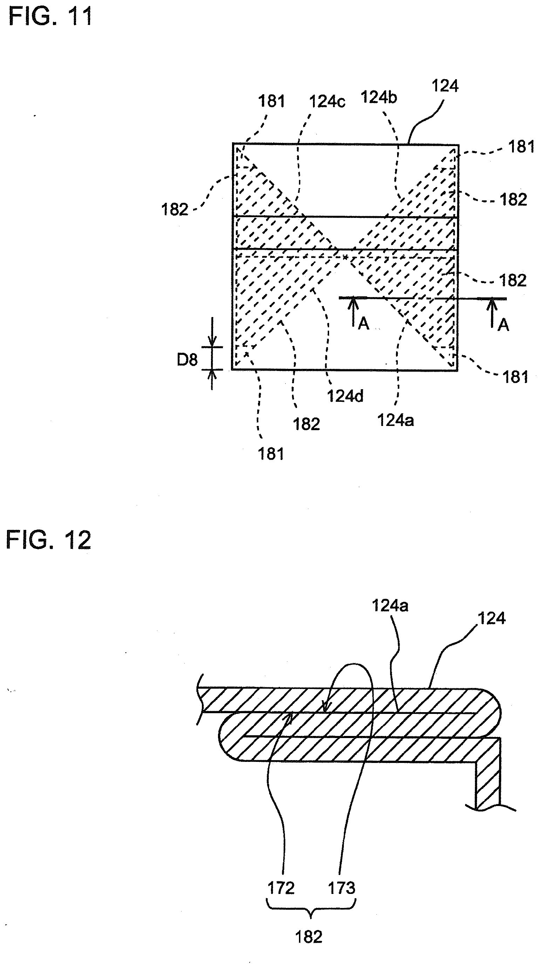

FIG. 11 is a bottom view of the reagent container 100. As shown in FIG. 11, the overlapping portions 124a, 124b, 124c and 124d that have been formed in this manner are provided with non-adhered portions 181 including a vertex of the quadrangular bottom surface 124 and adhered portions 182 that that are portions other than the non-adhered portions 181. That is, the non-adhered portion 181 is a portion in which the polyethylene layer 144 has not been melted without applying hot air thereto, and therefore, the two sheet portions are not welded. On the other hand, the adhered portion 182 is a portion in which the polyethylene layer 144 has been melted by applying hot air thereto, and therefore, the two overlapping sheet portions are welded. The non-adhered portion 181 of the overlapping portion 124a is a triangle similar to the overlapping portion 124a, and is a region with a triangular shape having the vertex at the position that is spaced apart by the length D8 (10 mm) from the vertex of the bottom surface 124 in a direction toward the vertex of the overlapping portion 124b. Since the other non-adhered portions 181 are also provided in the similar region, the description about them will be omitted. It should be noted that although a shape of the non-adhered portion 181 is not limited to a triangle, it is preferable that the non-adhered portion 181 includes at least a region in a range of 5 to 15 mm from the vertex included in the non-adhered portion 181 (that is, a region in a shape of an arc that has the vertex as the center and a radius of 5 to 15 mm).

FIG. 12 is a cross-sectional arrow view taken along A-A line of FIG. 11, illustrating a cross-section of the bottom surface 124. As shown in FIG. 12, the bottom surface 124 is formed by folding the sheet member 140. The overlapping portion 124a of the bottom surface 124 is constituted by the small triangles T2 and T3 that overlap each other by folding the sheet member 140. Moreover, in the overlapping portion 124a, the trapezoidal portion 173 and the trapezoidal portion 172 overlap and adhere to each other, and thereby the adhered portion 182 is formed.

By adopting the above-described configuration, the non-adhered portion 181 of the bottom surface 124 is deformed when impact is applied to the corner portion of the bottom surface 124 of the reagent container 100, and thereby, it is possible to distribute stress generated at the corner portion of the bottom surface 124 and to prevent the corner portion and its surroundings from being broken. Moreover, in the reagent container 100, it is possible to prevent the reagent container from being broken only by not welding the non-adhered portion 181, and therefore, it is possible to enhance the impact resistance without providing a reinforcing member at the lower end of the reagent container 100.

If the region including the vertex of the bottom surface of the reagent container is welded by resin, the corner portion itself can maintain its shape when impact is applied to the corner portion of the bottom surface, but there is a possibility that the impact acts on the end portion of resin welded portion and the polyethylene layer and the barrier layer are damaged at the border between the welded portion and the non-welded portion. If the polyethylene layer is damaged, the reagent may pass through the damaged portion of the polyethylene layer and an opening may be formed in the substrate layer paper by erosive action of the surfactant contained in the reagent, and thereby, the liquid may leak therefrom. Also, if the barrier layer is damaged, there is a possibility that air or water vapor infiltrates from the outside of the reagent container and thereby, the deterioration of the reagent progresses.

In the reagent container 100 according to the above-described embodiment, the non-adhered portions are provided at the corner portions of the bottom surface 124, and therefore, the corner portion itself can be deformed to absorb impact when impact is applied to the corner portion, and it is possible to prevent the barrier layer and the polyethylene layer near the corner portion from being damaged. Therefore, even when the reagent containing a nonionic surfactant or an anionic surfactant, which especially exhibits strong osmotic action, is housed, it can be expected that the reagent container is highly effective in preventing liquid leakage.

### Other embodiments

In the above-described embodiment, as shown in FIG. 11, the non-adhered portion 181 is a region with a triangular shape having the vertex at the position that is spaced apart by the length D8 (10 mm) from the vertex of the bottom surface 124, but the length D8 is not limited to 10 mm. When using the reagent container 100 according to the above-described embodiment, it is possible to enhance the impact resistance of the corner portion as long as D8 is 5 mm or more and 15 mm or less. Moreover, the length D8 can be set as appropriate in accordance with the size of the reagent container, and it is possible to enhance the impact resistance of the corner portion as long as the length D8 is longer than or equal to 3% with respect to the length D1 of one side of the bottom surface 124. In particular, when the length D8 is 3% or more and 18% or less with respect to the length D1, it is possible to enhance the impact resistance near the corner portion while shape stability of the reagent container 100 is preferably maintained.

It should be noted that in the above-described embodiment, the configuration has been described in which the reagent container 100 has a rectangular parallelepiped shape with a square cross-section, but there is no limitation to this. The reagent container may have a rectangular parallelepiped shape with a rectangular cross-section or have a cross-section in another polygonal shape.

In the above-described embodiment, the configuration has been described in which the polyethylene layer of the sheet member 140 is heated by hot air to be melted and the surfaces of the sheet member 140 in which the polyethylene layer is melted come into close contact with each other to be welded, but there is no limitation to this. A configuration may be adopted in which the surfaces of the sheet member 140 are adhered by an adhesive when joined portions of the sheet member 140, such as the adhered portion 182, is formed.

In the above-described embodiment, the configuration has been described in which the non-adhered portion 181 is provided at each corner portion of the bottom surface 124 of the reagent container 100, but there is no limitation to this. The non-adhered portion needs only to be provided at at least one corner portion of the bottom surface. However, as the number of the corner portions at which the non-adhered portion is provided increases, it is possible to prevent stress from being concentrated at the corner portions when impact is applied to the reagent container 100. Accordingly, it is preferable that the non-adhered portions are provided at all of the corner portions of the bottom surface. Thereby, it is possible to prevent stress from being concentrated at any of the corner portions at the lower end of the reagent container, and to provide high impact resistance.

In the above-described embodiment, the configuration has been described in which the barrier layer 143 formed by ceramic vapor deposition is provided on the sheet member 140, but there is no limitation to this. The sheet member 140 may be provided with a barrier layer formed by aluminum vapor deposition instead of the barrier layer 143 formed by ceramic vapor deposition or may be provided with no barrier layer. However, by providing the barrier layer formed by ceramic vapor deposition rather than the barrier layer formed by aluminum vapor deposition, it is possible to restrain the thermal conductivity, and therefore, this is preferable in that it is possible to reliably melt only the portion desired to be melted when the polyethylene layer is melted.

In the above-described embodiment, the configuration has been described in which the polyethylene layers 142 and 144 are provided on the sheet member 140, but there is no limitation to this. The coated layer of the sheet member may be formed of polyolefin other than polyethylene, such as polypropylene, ethylene-propylene copolymer and polybutene-1, or thermoplastic resin other than polyolefin, such as polyamide and polyester.

In the above-described embodiment, the reagent container for housing 4 liters of the reagent has been described, but there is no limitation to 4 liters, and the present invention may be applied to reagent containers for housing 1 to 5 liters of the reagent.

In the above-described embodiment, no reinforcing member is provided at the lower end of the reagent container 100, but a reinforcing member may be provided at the lower end of the reagent container 100 in order to further enhance the strength of the reagent container 100. For example, a tape may be applied near the lower end of the body portion of the reagent container 100.

### List of Reference Numerals

- 1: Biological sample analyzer
- 21: Connector
- 22: Tube
- 100: Reagent container
- 121: Upper surface
- 122: Front surface
- 123: Side surface
- 124: Bottom surface
- 124a, 124b, 124c, 124d: Overlapping portion
- 130: Opening
- 131: Cap
- 140: Sheet member
- 141: Substrate layer
- 142, 144: Polyethylene layer
- 143: Barrier layer
- B1, B2, B3, B4: Rectangular portion
- 160: Tubular carton
- 161: Carton top portion
- 162: Carton bottom portion
- 170: Molten portion
- 171, 172: Trapezoidal portion
- 181: Non-adhered portion
- 182: Adhered portion

## Claims

1. A reagent container for a biological sample analyzer that is formed of a paper sheet member for housing a reagent to be used in the biological sample analyzer, comprising:
a bottom surface (124); and
side wall surfaces (123) connected to the bottom surface (124),
wherein the bottom surface (124) is formed by folding one end side of a tubular body with a prismatic tubular shape formed of the sheet member and adhering overlapping surfaces to each other, and
the overlapping surfaces are not adhered to each other in a non-adhered portion (181) including a vertex of the bottom surface (124), **characterised in that**: the non-adhered portion (181) is a region in which the overlapping surfaces are not adhered to each other, wherein the region has a vertex at a position that is spaced apart by a length (D8) from the vertex of the bottom surface (124),
wherein the length (D8) is 3% or more and 18% or less with respect to a length of the one side of the bottom surface.

2. The reagent container for a biological sample analyzer according to claim 1,
wherein there are a plurality of non-adhered portions (181) in which the overlapping surfaces are not adhered to each other, and are separately provided with respect to all of vertices of the bottom surface (124).

3. The reagent container for a biological sample analyzer according to claim 1 or claim 2,
wherein the non-adhered portion (181) is a region in which the overlapping surfaces are not adhered to each other, wherein the region has a triangular shape having a vertex at a position that is spaced apart by a length (D8) from the vertex of the bottom surface (124), wherein the length (D8) is 5 mm or more and 15 mm or less.

4. The reagent container for a biological sample analyzer according to claim 1,
wherein the sheet member has a paper substrate layer (141) and a thermoplastic resin layer, and
the bottom surface (124) is formed by welding the thermoplastic resin layers of surfaces that overlap each other by folding the one end side of the tubular body.

5. The reagent container for a biological sample analyzer according to claim 1,
wherein the sheet member has a barrier layer (143) formed by ceramic vapor deposition between the substrate layer and the thermoplastic resin layer.

6. The reagent container for a biological sample analyzer according to claim 1, comprising:
an upper surface formed by folding the other end side of the tubular body and adhering overlapping surfaces to each other.

7. The reagent container for a biological sample analyzer according to claim 1,
which houses a reagent containing a surfactant.

8. The reagent container for a biological sample analyzer according to claim 7,
wherein the biological sample is blood, and
the reagent is a hemolyzing agent for hemolyzing erythrocytes in the blood.

9. The reagent container for a biological sample analyzer according to claim 7,
wherein the biological sample is blood, and
the reagent is a diluting solution for diluting the blood.

10. The reagent container for a biological sample analyzer according to claim 1,
wherein the tubular body has a quadrangular cross-section,
a belt-shaped portion (156a, 156b) that is provided in a belt shape along the one end, a pair of first rectangular portions that are connected to the belt-shaped portion and oppose each other, and a pair of second rectangular portions that are connected to the belt-shaped portion and oppose each other are provided on the one end side of the tubular body, and
the bottom surface is formed by folding the pair of first rectangular portions, the pair of second rectangular portions and the belt-shaped portion and adhering regions other than vertex portions of the first rectangular portions and the second rectangular portions in overlapping surfaces.

11. The reagent container for a biological sample analyzer according to claim 10,
wherein a portion of an inner surface of the first rectangular portion and a portion of an inner surface of the second rectangular portion that is adjacent to the first rectangular portion are adhered to each other.

12. The reagent container for a biological sample analyzer according to claim 11,
wherein the pair of first rectangular portions and the pair of second rectangular portions are folded by folding the pair of first rectangular portions toward the inner side of the tubular body and pressing the pair of second rectangular portions so as to overlap the pair of folded first rectangular portions.

13. The reagent container for a biological sample analyzer according to claim 12,
wherein the side wall surface has a pair of third rectangular portions that are connected to the pair of first rectangular portions and oppose each other,
the first rectangular portion includes a first side shared with the third rectangular portion and a second side facing the first side, and
the pair of first rectangular portions are folded toward the inner side of the tubular body along a first straight line that joins a first apex at one end on the first side and a middle point of the second side and a second straight line that joins a second apex at the other end of the first side and the middle point of the second side.

14. The reagent container for a biological sample analyzer according to claim 13,
wherein the side wall surface has a pair of fourth rectangular portions that are connected to the pair of second rectangular portions and oppose each other,
the second rectangular portion includes a third side shared with the fourth rectangular portion and a fourth side facing the third side,
a first right triangle that includes the first straight line as an oblique side and a second right triangle that includes the second straight line as an oblique side are formed in the first rectangular portion,
a third right triangle including, as an oblique side, a third straight line that joins a third vertex at one end of the third side and a middle point of the fourth side and a fourth right triangle including, as an oblique side, a fourth straight line that joins a fourth vertex at the other end of the third side and the middle point of the fourth side are formed in the second rectangular portion, and
the pair of first rectangular portions and the pair of second rectangular portions are folded so that an inner surface of the first right triangle comes into contact with an inner surface of the fourth right triangle adjacent to the first right triangle and an inner surface of the second right triangle comes into contact with an inner surface of the third right triangle adjacent to the second right triangle.

15. The reagent container for a biological sample analyzer according to claim 14,
wherein a region including the first vertex of the first right triangle and a region including the fourth vertex of the fourth right triangle are not adhered to each other, and
a region including the second vertex of the second right triangle and a region including the third vertex of the third right triangle are not adhered to each other.

16. A method for manufacturing a reagent container for a biological sample analyzer for housing a reagent to be used in the biological sample analyzer using a sheet member including a paper substrate layer and a thermoplastic resin layer, comprising steps of:
forming a tubular body (160) that has a quadrangular cross-section using the sheet member,
melting the thermoplastic resin layer (142) at a region other than a portion that becomes a corner portion of a bottom surface of the reagent container on one end side of the tubular body, and
forming the bottom surface by folding the one end side of the tubular body and welding the thermoplastic resin layers of overlapping surfaces, wherein the corner portion in which the thermoplastic resin layers are not welded has a triangular shape having a vertex at a position that is spaced apart by a length (D8) from the vertex of the bottom surface (124),
wherein
the length (D8) is 3% or more and 18% or less with respect to a length (D1) of the one side of the bottom surface (124).

## Patentansprüche

1. Reagenzbehälter für einen biologischen Probenanalysator, der aus einem Papierblattglied zum Einfassen eines Reagens ausgebildet ist, welches im biologischen Probenanalysator benutzt werden soll, umfassend:
eine Bodenfläche (124); und
Seitenwandflächen (123), die mit der Bodenfläche (124) verbunden sind,
wobei die Bodenfläche (124) durch Falzen einer Endseite eines rohrförmigen Körpers mit einer prismatischen Rohrform, der aus dem Blattglied ausgebildet ist, und Anhaften von überlappenden Flächen aneinander ausgebildet ist, und
wobei die überlappenden Flächen in einem nicht angehafteten Abschnitt (181), der einen Scheitel der Bodenfläche (124) enthält, nicht aneinander angehaftet sind, **dadurch gekennzeichnet, dass**: der nicht angehaftete Abschnitt (181) eine Region ist, in der die überlappenden Flächen nicht aneinander angehaftet sind, wobei die Region einen Scheitel an einer Position aufweist, die um eine Länge (D8) vom Scheitel der Bodenfläche (124) beabstandet ist,
wobei die Länge (D8) 3 % oder mehr und 18 % oder weniger bezüglich einer Länge der einen Seite der Bodenfläche beträgt.

2. Reagenzbehälter für einen biologischen Probenanalysator nach Anspruch 1,
wobei mehrere nicht angehaftete Abschnitte (181) vorliegen, in denen die überlappenden Flächen nicht aneinander angehaftet sind, und die separat bezüglich allen Scheiteln der Bodenfläche (124) vorgesehen sind.

3. Reagenzbehälter für einen biologischen Probenanalysator nach Anspruch 1 oder Anspruch 2,
wobei der nicht angehaftete Abschnitt (181) eine Region ist, in der die überlappenden Flächen nicht aneinander angehaftet sind, wobei die Region eine Dreiecksform mit einem Scheitel an einer Position aufweist, die um eine Länge (D8) vom Scheitel der Bodenfläche (124) beabstandet ist, wobei die Länge (D8) 5 mm oder mehr und 15 mm oder weniger beträgt.

4. Reagenzbehälter für einen biologischen Probenanalysator nach Anspruch 1,
wobei das Blattglied eine Papiersubstratschicht (141) und eine Thermoplastharzschicht aufweist, und
wobei die Bodenfläche (124) durch Verschweißen der Thermoplastharzschichten von Flächen, die einander durch Falzen der einen Endseite des rohrförmigen Körpers überlappen, ausgebildet ist.

5. Reagenzbehälter für einen biologischen Probenanalysator nach Anspruch 1,
wobei das Blattglied eine Sperrschicht (143) aufweist, die durch keramische Dampfabscheidung zwischen der Substratschicht und der Thermoplastharzschicht ausgebildet ist.

6. Reagenzbehälter für einen biologischen Probenanalysator nach Anspruch 1, umfassend:
eine obere Fläche, die durch Falzen der anderen Endseite des rohrförmigen Körpers und Anhaften von überlappenden Flächen aneinander ausgebildet ist.

7. Reagenzbehälter für einen biologischen Probenanalysator nach Anspruch 1,
der ein Reagens einfasst, welches einen oberflächenaktiven Stoff enthält.

8. Reagenzbehälter für einen biologischen Probenanalysator nach Anspruch 7,
wobei die biologische Probe Blut ist, und
wobei das Reagens ein hämolysierender Wirkstoff zum Hämolysieren von Erythrozyten im Blut ist.

9. Reagenzbehälter für einen biologischen Probenanalysator nach Anspruch 7,
wobei die biologische Probe Blut ist, und
wobei das Reagens eine Verdünnungslösung zum Verdünnen des Bluts ist.

10. Reagenzbehälter für einen biologischen Probenanalysator nach Anspruch 1,
wobei der rohrförmige Körper einen vierseitigen Querschnitt aufweist,
wobei ein gurtförmiger Abschnitt (156a, 156b), der in einer Gurtform entlang des einen Endes vorgesehen ist, ein Paar erster rechteckiger Abschnitte, die mit dem gurtförmigen Abschnitt verbunden sind und einander gegenüberliegen, und ein Paar zweiter rechteckiger Abschnitte, die mit dem gurtförmigen Abschnitt verbunden sind und einander gegenüberliegen, auf der einen Endseite des rohrförmigen Körpers vorgesehen sind, und
wobei die Bodenfläche durch Falzen des Paars erster rechteckiger Abschnitte, des Paars zweiter rechteckiger Abschnitte und des gurtförmigen Abschnitts und Anhaften von anderen Regionen als Scheitelabschnitten der ersten rechteckigen Abschnitte und der zweiten rechteckigen Abschnitte in überlappenden Flächen ausgebildet ist.

11. Reagenzbehälter für einen biologischen Probenanalysator nach Anspruch 10,
wobei ein Abschnitt einer inneren Fläche des ersten rechteckigen Abschnitts und ein Abschnitt einer inneren Fläche des zweiten rechteckigen Abschnitts, der dem ersten rechteckigen Abschnitt benachbart ist, aneinander angehaftet sind.

12. Reagenzbehälter für einen biologischen Probenanalysator nach Anspruch 11,
wobei das Paar erster rechteckiger Abschnitte und das Paar zweiter rechteckiger Abschnitte durch Falzen des Paars erster rechteckiger Abschnitte zur Innenseite des rohrförmigen Körpers hin und derartiges Pressen des Paars zweiter rechteckiger Abschnitte, dass sie das Paar erster rechteckiger Abschnitte überlappen, gefalzt werden.

13. Reagenzbehälter für einen biologischen Probenanalysator nach Anspruch 12,
wobei die Seitenwandfläche ein Paar dritter rechteckiger Abschnitte aufweist, die mit dem Paar erster rechteckiger Abschnitte verbunden sind und einander gegenüberliegen,
wobei der erste rechteckige Abschnitt eine erste Seite, die mit dem dritten rechteckigen Abschnitt geteilt wird, und eine zweite Seite enthält, die der ersten Seite zugekehrt ist, und
wobei das Paar erster rechteckiger Abschnitte zur Innenseite des rohrförmigen Körpers entlang einer ersten geraden Linie, die einen ersten Scheitel an einem Ende auf der ersten Seite und einen Mittelpunkt der zweiten Seite verbindet, und einer zweiten geraden Linie, die einen zweiten Scheitel am anderen Ende der ersten Seite und den Mittelpunkt der zweiten Seite verbindet, hin gefalzt sind.

14. Reagenzbehälter für einen biologischen Probenanalysator nach Anspruch 13,
wobei die Seitenwandfläche ein Paar vierter rechteckiger Abschnitte aufweist, die mit dem Paar zweiter rechteckiger Abschnitte verbunden sind und einander gegenüberliegen,
wobei der zweite rechteckige Abschnitt eine dritte Seite, die mit dem vierten rechteckigen Abschnitt geteilt wird, und eine vierte Seite enthält, die der dritten Seite zugekehrt ist,
wobei ein erstes rechtwinkliges Dreieck, das die erste gerade Linie als eine schiefe Seite enthält, und ein zweites rechtwinkliges Dreieck, das die zweite gerade Linie als eine schiefe Seite enthält, im ersten rechtwinkligen Abschnitt ausgebildet sind,
wobei ein drittes rechtwinkliges Dreieck, das, als eine schiefe Seite, eine dritte gerade Linie enthält, welche einen dritten Scheitel an einem Ende der dritten Seite und einen Mittelpunkt der vierten Seite verbindet, und ein viertes rechtwinkliges Dreieck, das, als eine schiefe Seite, eine vierte gerade Linie enthält, welche einen vierten Scheitel am anderen Ende der dritten Seite und einen Mittelpunkt der vierten Seite verbindet, im zweiten rechteckigen Abschnitt ausgebildet sind, und
wobei das Paar erster rechteckiger Abschnitte und das Paar zweiter rechteckiger Abschnitte derart gefalzt sind, dass eine innere Fläche des ersten rechtwinkligen Dreiecks in Kontakt mit einer inneren Fläche des vierten rechtwinkligen Dreiecks kommt, das dem ersten rechtwinkligen Dreieck benachbart ist, und eine innere Fläche des zweiten rechtwinkligen Dreiecks in Kontakt mit einer inneren Fläche des dritten rechtwinkligen Dreiecks kommt, das dem zweiten rechtwinkligen Dreieck benachbart ist.

15. Reagenzbehälter für einen biologischen Probenanalysator nach Anspruch 14,
wobei eine Region, die den ersten Scheitel des ersten rechteckigen Dreiecks enthält, und eine Region, die den vierten Scheitel des vierten rechtwinkligen Dreiecks enthält, nicht aneinander angehaftet sind, und
wobei eine Region, die den zweiten Scheitel des zweiten rechteckigen Dreiecks enthält, und eine Region, die den dritten Scheitel des dritten rechtwinkligen Dreiecks enthält, nicht aneinander angehaftet sind.

16. Verfahren zum Herstellen eines Reagenzbehälters für einen biologischen Probenanalysator zum Einfassen eines Reagens, das im biologischen Probenanalysator benutzt werden soll, unter Benutzung eines Blattglieds, das eine Papiersubstratschicht und eine Thermoplastharzschicht enthält, folgende Schritte umfassend:
Ausbilden eines rohrförmigen Körpers (160), der einen vierseitigen Querschnitt aufweist, unter Benutzung des Blattglieds,
Schmelzen der Thermoplastharzschicht (142) an einer anderen Region als einem Abschnitt, der ein Eckabschnitt einer Bodenfläche des Reagenzbehälters wird, auf einer Endseite des rohrförmigen Körpers, und
Ausbilden der Bodenfläche durch Falzen der einen Endseite des rohrförmigen Körpers und Verschweißen der Thermoplastharzschichten von überlappenden Flächen, wobei der Eckabschnitt, in dem die Thermoplastharzschichten nicht verschweißt werden, eine Dreiecksform mit einem Scheitel an einer Position aufweist, die um eine Länge (D8) vom Scheitel der Bodenfläche (124) beabstandet ist,
wobei die Länge (D8) 3 % oder mehr und 18 % oder weniger bezüglich einer Länge (D1) der einen Seite der Bodenfläche (124) beträgt.

## Revendications

1. Récipient pour réactif pour un analyseur d'échantillon biologique qui est formé d'un élément de feuille de papier pour loger un réactif à utiliser dans l'analyseur d'échantillon biologique, comprenant :
une surface inférieure (124) ; et
des surfaces de paroi latérale (123) connectées à la surface inférieure (124),
dans lequel la surface inférieure (124) est formée en pliant un côté d'extrémité d'un corps tubulaire ayant une forme tubulaire prismatique formé de l'élément de feuille et en collant les surfaces se chevauchant les unes aux autres, et
les surfaces se chevauchant ne sont pas collées les unes aux autres dans une partie de non-adhérence (181) incluant un sommet de la surface inférieure (124), **caractérisé en ce que** : la partie de non-adhérence (181) est une région dans laquelle les surfaces se chevauchant ne sont pas collées les unes aux autres, dans lequel la région présente un sommet à une position qui est séparée par une longueur (D8) par rapport au sommet de la surface inférieure (124),
dans lequel la longueur (D8) est de 3 % ou plus et de 18 % ou moins par rapport à une longueur du côté de la surface inférieure.

2. Récipient pour réactif pour un analyseur d'échantillon biologique selon la revendication 1,
dans lequel il y a une pluralité de parties de non-adhérence (181) dans lesquelles les surfaces se chevauchant ne sont pas collées les unes aux autres, et sont fournies séparément par rapport à tous les sommets de la surface inférieure (124).

3. Récipient pour réactif pour un analyseur d'échantillon biologique selon la revendication 1 ou la revendication 2,
dans lequel la partie de non-adhérence (181) est une région dans laquelle les surfaces se chevauchant ne sont pas collées les unes aux autres, dans lequel la région présente une forme triangulaire ayant un sommet à une position qui est séparée par une longueur (D8) par rapport au sommet de la surface inférieure (124), dans lequel la longueur (D8) est de 5 mm ou plus et de 15 mm ou moins.

4. Récipient pour réactif pour un analyseur d'échantillon biologique selon la revendication 1,
dans lequel l'élément de feuille comporte une couche de substrat de papier (141) et une couche de résine thermoplastique, et
la surface inférieure (124) est formée en soudant les couches de résine thermoplastique de surfaces qui se chevauchent les unes sur les autres en pliant le côté d'extrémité du corps tubulaire.

5. Récipient pour réactif pour un analyseur d'échantillon biologique selon la revendication 1,
dans lequel l'élément de feuille comporte une couche barrière (143) formée par dépôt de céramique en phase vapeur entre la couche de substrat et la couche de résine thermoplastique.

6. Récipient pour réactif pour un analyseur d'échantillon biologique selon la revendication 1, comprenant :
une surface supérieure formée en pliant l'autre côté d'extrémité du corps tubulaire et en collant les surfaces se chevauchant les unes aux autres.

7. Récipient pour réactif pour un analyseur d'échantillon biologique selon la revendication 1,
qui loge un réactif contenant un tensioactif.

8. Récipient pour réactif pour un analyseur d'échantillon biologique selon la revendication 7,
dans lequel l'échantillon biologique est du sang, et
le réactif est un agent d'hémolyse pour hémolyser les érythrocytes dans le sang.

9. Récipient pour réactif pour un analyseur d'échantillon biologique selon la revendication 7,
dans lequel l'échantillon biologique est du sang, et
le réactif est une solution de dilution pour diluer le sang.

10. Récipient pour réactif pour un analyseur d'échantillon biologique selon la revendication 1,
dans lequel le corps tubulaire présente une section transversale quadrangulaire, une partie en forme de bande (156a, 156b) qui est fournie sous la forme d'une bande le long de l'extrémité, une paire de premières parties rectangulaires qui sont connectées à la partie en forme de bande et opposées l'une à l'autre, et une paire de deuxièmes parties rectangulaires qui sont connectées à la partie en forme de bande et opposées l'une à l'autre sont fournies sur le côté d'extrémité du corps tubulaire, et
la surface inférieure est formée en pliant la paire de premières parties rectangulaires, la paire de deuxièmes parties rectangulaires et la partie en forme de bande et en collant des régions autres que des parties de sommet des premières parties rectangulaires et des deuxièmes parties rectangulaires dans des surfaces se chevauchant.

11. Récipient pour réactif pour un analyseur d'échantillon biologique selon la revendication 10,
dans lequel une partie d'une surface interne de la première partie rectangulaire et une partie d'une surface interne de la deuxième partie rectangulaire qui est adjacente à la première partie rectangulaire sont collées l'une à l'autre.

12. Récipient pour réactif pour un analyseur d'échantillon biologique selon la revendication 11,
dans lequel la paire de premières parties rectangulaires et la paire de deuxièmes parties rectangulaires sont pliées en pliant la paire de premières parties rectangulaires vers le côté interne du corps tubulaire et en pressant la paire de deuxièmes parties rectangulaires afin de chevaucher la paire de premières parties rectangulaires pliées.

13. Récipient pour réactif pour un analyseur d'échantillon biologique selon la revendication 12,
dans lequel la surface de paroi latérale présente une paire de troisièmes parties rectangulaires qui sont connectées à la paire de premières parties rectangulaires et opposées l'une à l'autre,
la première partie rectangulaire inclut un premier côté partagé avec la troisième partie rectangulaire et un deuxième côté faisant face au premier côté, et
la paire de premières parties rectangulaires est pliée vers le côté interne du corps tubulaire le long d'une première ligne droite qui joint un premier sommet à une extrémité du premier côté et un point intermédiaire du deuxième côté et une deuxième ligne droite qui joint un deuxième sommet à l'autre extrémité du premier côté et le point intermédiaire du deuxième côté.

14. Récipient pour réactif pour un analyseur d'échantillon biologique selon la revendication 13,
dans lequel la surface de paroi latérale présente une paire de quatrièmes parties rectangulaires qui sont connectées à la paire de deuxièmes parties rectangulaires et opposées l'une à l'autre,
la deuxième partie rectangulaire inclut un troisième côté partagé avec la quatrième partie rectangulaire et un quatrième côté faisant face au troisième côté,
un premier triangle rectangle qui inclut la première ligne droite en tant que côté oblique et un deuxième triangle rectangle qui inclut la deuxième ligne droite en tant que côté oblique sont formés dans la première partie rectangulaire,
un troisième triangle rectangle incluant, en tant que côté oblique, une troisième ligne droite qui joint un troisième sommet à une extrémité du troisième côté et un point intermédiaire du quatrième côté et un quatrième triangle rectangle incluant, en tant que côté oblique, une quatrième ligne droite qui joint un quatrième sommet à l'autre extrémité du troisième côté et le point intermédiaire du quatrième côté sont formés dans la deuxième partie rectangulaire, et
la paire de premières parties rectangulaires et la paire de deuxièmes parties rectangulaires sont pliées de façon qu'une surface interne du premier triangle rectangle vienne en contact avec une surface interne du quatrième triangle rectangle adjacent au premier triangle rectangle et qu'une surface interne du deuxième triangle rectangle vienne en contact avec une surface interne du troisième triangle rectangle adjacent au deuxième triangle rectangle.

15. Récipient pour réactif pour un analyseur d'échantillon biologique selon la revendication 14,
dans lequel une région incluant le premier sommet du premier triangle rectangle et une région incluant le quatrième sommet du quatrième triangle rectangle ne sont pas collées l'une à l'autre, et
une région incluant le deuxième sommet du deuxième triangle rectangle et une région incluant le troisième sommet du troisième triangle rectangle ne sont pas collées l'une à l'autre.

16. Procédé pour fabriquer un récipient pour réactif pour un analyseur d'échantillon biologique pour loger un réactif à utiliser dans l'analyseur d'échantillon biologique en utilisant un élément de feuille incluant une couche de substrat de papier et une couche de résine thermoplastique, comprenant les étapes suivantes :
la formation d'un corps tubulaire (160) qui présente une section transversale quadrangulaire en utilisant l'élément de feuille,
la fusion de la couche de résine thermoplastique (142) au niveau d'une région autre qu'une partie qui devient une partie de coin d'une surface inférieure du récipient pour réactif sur un côté d'extrémité du corps tubulaire, et
la formation de la surface inférieure en pliant le côté d'extrémité du corps tubulaire et en soudant les couches de résine thermoplastique de surfaces se chevauchant, dans lequel la partie de coin dans laquelle les couches de résine thermoplastique ne sont pas soudées présente une forme triangulaire ayant un sommet à une position qui est séparée par une longueur (D8) par rapport au sommet de la surface inférieure (124),
dans lequel
la longueur (D8) est de 3 % ou plus et de 18 % ou moins par rapport à une longueur (D1) du côté de la surface inférieure (124).
